# FASCICULE DE BREVET EUROPEEN

(11) **EP 0 390 713 B1**
(45) Date de publication et mention de la délivrance du brevet: **27.10.1993**
(21) Numéro de dépôt: 90440027.2
(22) Date de dépôt: 19.03.1990
(51) Int. Cl.: A01D 78/12

(54) **Machine agricole avec au moins un rotor pour déplacer des produits se trouvant sur le sol**
Landmaschine mit mindestens einem Rechrad zum Versetzen von sich auf dem Boden befindlichen Produkten
Agricultural machine having at least one rotor for moving products located on the ground

(30) Priorité: 20.03.1989 FR 8903804
(43) Date de publication de la demande: 03.10.1990
(73) Titulaire: KUHN S.A., F-67700 Saverne (FR)
(72) Inventeur: Aron, Jérôme, Aron M., F-67330 Dossenheim-Sur-Zinsel (FR)
(74) Mandataire: Andres, Jean-Claude

(56) Documents cités:
- CH-A- 641 320
- DE-A- 2 024 167
- DE-A- 2 833 814
- DE-U- 8 624 528

## Description

La présente invention se rapporte à une machine agricole comportant notamment un bâti pouvant être accroché à un tracteur d'entraînement et portant au moins un rotor muni d'outils de travail commandés par une came centrale, en vue de déplacer des produits tels que du fourrage se trouvant sur le sol. Ledit rotor est articulé sur le bâti au moyen d'un axe sensiblement perpendiculaire au sens d'avancement de la machine et comporte un axe support central auquel sont reliées des roulettes porteuses qui se déplacent sur le sol durant le travail et qui sont disposées sur au moins deux lignes décalées l'une par rapport à l'autre dans la direction d'avancement de la machine. Ladite came de commande centrale peut être tournée d'au moins 180° pour travailler dans des directions d'avancement opposées.

Sur une telle machine, le rotor peut bien suivre les dénivellations du sol lorsqu'elles ne sont pas trop importantes. Toutefois, sur les terrains fortement dénivelés et lorsque les roulettes qui sont le plus en avant rencontrent un obstacle relativement abrupt tel que la paroi d'un sillon, le rotor a tendance à basculer vers l'avant autour de son axe d'articulation. Le poids du rotor et la force de traction qui fait avancer la machine s'appliquent alors essentiellement sur ces roulettes avant. Ceci augmente encore les difficultés qu'ont ces roulettes pour franchir l'obstacle rencontré. En sus, la partie avant du rotor est pressée contre le sol et les outils qui se situent dans cette partie avant grattent le sol, voire s'y enfoncent et se brisent.

Sur la machine connue dans la demande de brevet DE-A-2 833 814 qui montre les caractéristiques du préambule de la revendication 1, le rotor est articulé sur le bâti support au moyen d'un axe sensiblement vertical. Sous cet axe est prévue une articulation supplémentaire comprenant un premier axe parallèle au sol et dirigé dans la direction d'avancement et un deuxième axe également parallèle au sol, mais transversal à la direction d'avancement. Pour diminuer la tendance qu'a ce rotor à piquer vers l'avant, il est prévu un ressort de traction qui le retient vers le haut. Ce ressort est lié au dispositif de protection qui est solidaire du rotor et au bâti support.

Lors de chaque changement de direction de travail, il faut notamment détacher le ressort pour pouvoir tourner le rotor autour de l'axe d'articulation sensiblement vertical et le faire passer sous les poutres du bâti support. Cela nécessite une intervention de la part de l'utilisateur et exclut l'adaptation automatique du rotor lorsque la direction d'avancement est inversée.

La présente invention a pour but de proposer une machine telle que décrite dans l'introduction et n'ayant pas les inconvénients précités des machines connues.

A cet effet, une importante caractéristique de l'invention consiste en ce que la machine comporte au moins deux moyens d'actionnement à actions opposées disposés entre le bâti et le rotor, qui font pivoter l'un ou l'autre, en fonction de la position de la came de commande, le rotor autour de l'axe d'articulation sur le bâti, en direction de la ou des roulette(s) située(s) sur la ligne la plus en arrière par rapport au sens d'avancement, de telle sorte que cette ou ces roulette(s) soit(ent) poussée(s) vers le sol et que la charge supportée par les roulettes situées sur la ligne la plus en avant soit diminuée.

Avec cet agencement, on obtient automatiquement un report partiel de charge des roulettes avant sur la ou les roulettes arrière, quelle que soit la direction d'avancement. Ceci est particulièrement important dans le cas de machines utilisées alternativement en marche avant et en marche arrière.

Un autre avantage du mode de réalisation selon l'invention est que la roulette la plus en arrière peut parfaitement positionner la came de commande des outils de travail en fonction de la direction d'avancement. Grâce au fait qu'elle est poussée vers le sol elle est moins sensible aux dénivellations du sol et peut assurer un positionnement stable et continu.

Une autre caractéristique de l'invention consiste en ce que la machine comporte des moyens qui immobilisent l'axe support du rotor lorsque les roulettes sont dégagées du sol.

D'autres caractéristiques et avantages de l'invention ressortiront des autres revendications, ainsi que de la description ci-après de plusieurs exemples de réalisation non limitatifs de l'invention, avec référence aux dessins annexés, dans lesquels :
- La figure 1 représente une vue de côté avec une coupe partielle d'un premier exemple de réalisation d'une machine selon l'invention ;
- La figure 2 représente une vue analogue à celle de la figure 1, la machine étant dans une deuxième position de travail ;
- La Figure 3 représente, à plus grande échelle et avec une coupe partielle, une vue suivant la flèche V de la Figure 1 ;
- La Figure 4 représente également à plus grande échelle et avec une coupe partielle, une vue suivant la flèche V' de la Figure 2;
- La figure 5 représente une vue de côté avec une coupe partielle d'un second exemple de réalisation ;
- La figure 6 représente une vue analogue à celle de la figure 5, la machine étant dans une deuxième position de travail.

La machine agricole représentée sur les figures annexées comporte notamment un bâti (1) en forme de poutre, portant à l'une de ses extrémités un dispositif d'accouplement (2) et à son autre extrémité un rotor (3). Ledit dispositif d'accouplement présente deux points d'accrochage inférieurs (4) et un point d'accrochage supérieur (5) pour l'accouplement au dispositif de relevage d'un tracteur non représenté.

Le rotor (3) est articulé dans sa partie supérieure sur le bâti (1) au moyen d'un axe (6) sensiblement perpendiculaire au sens d'avancement (A) de la machine. Ledit rotor se compose d'un axe support (7) sensiblement vertical sur lequel est monté de manière à pouvoir tourner un boîtier (8) qui porte des outils de travail (9) et entoure une came fixe (10) pour la commande desdits outils. Ledit boîtier (8) se compose de deux parties (11 et 12) en forme de calottes qui supportent des paliers (13) pour des bras porte-outils (14). Ceux-ci s'étendent à travers ces paliers (13) de manière à pouvoir tourner sur eux-mêmes. Une de leurs extrémités s'étend en-dehors du boîtier (8) et porte les outils (9) constitués par des fourches. L'autre extrémité de chaque bras (14) se situe à l'intérieur du boîtier (8) et porte un levier (15) muni d'un galet (16) qui est guidé dans la came de commande (10). A cet effet, celle-ci présente un chemin de roulement (17) avec une dénivellation dirigée vers le haut. Ladite came (10) est immobilisée sur l'axe support (7) au moyen d'une clavette (18).

La partie supérieure (12) du boîtier (8) porte une couronne dentée (19). Celle-ci est en prise avec un pignon d'entraînement (20) qui est solidaire d'un arbre (21) pouvant être relié à l'arbre de prise de force du tracteur au moyen d'arbres intermédiaires. Cet arbre (21) est logé dans un alésage d'un couvercle (22) situé au-dessus de la couronne (19). Ce couvercle (22) comporte, de chaque côté, un logement pour l'axe d'articulation (6) qui est par ailleurs guidé dans des logements similaires prévus dans des oreilles (25) solidaires du bâti (1). Cet axe (6) est réalisé en deux parties alignées l'une sur l'autre et situées de part et d'autre de l'axe support central (7).

Ledit axe support (7) est lié avec sa partie inférieure par l'intermédiaire d'un support coudé (26) à un longeron (27) portant trois roulettes porteuses (28, 29 et 30) disposées sur deux lignes (31 et 32) pratiquement perpendiculaires à la direction (A) mais décalées l'une par rapport à l'autre vu dans cette direction (A). Une (28) de ces roulettes se situe sur une ligne (32) qui est derrière l'axe support central (7), tandis que les deux autres roulettes (29 et 30) se situent sur une ligne (31) qui passe devant cet axe (7). La roulette arrière (28) est reliée de manière non pivotante au longeron (27). Les deux autres roulettes (29 et 30) sont articulées sur des axes sensiblement verticaux (33) prévus sur une traverse (34) solidaire du longeron (27). Ces deux roulettes (29 et 30) sont espacées entre elles et peuvent pivoter autour des axes (33). Le nombre de roulettes indiqué ci-dessus n'est pas limitatif. On peut par exemple aussi prévoir deux roulettes (28) sur la ligne (32).

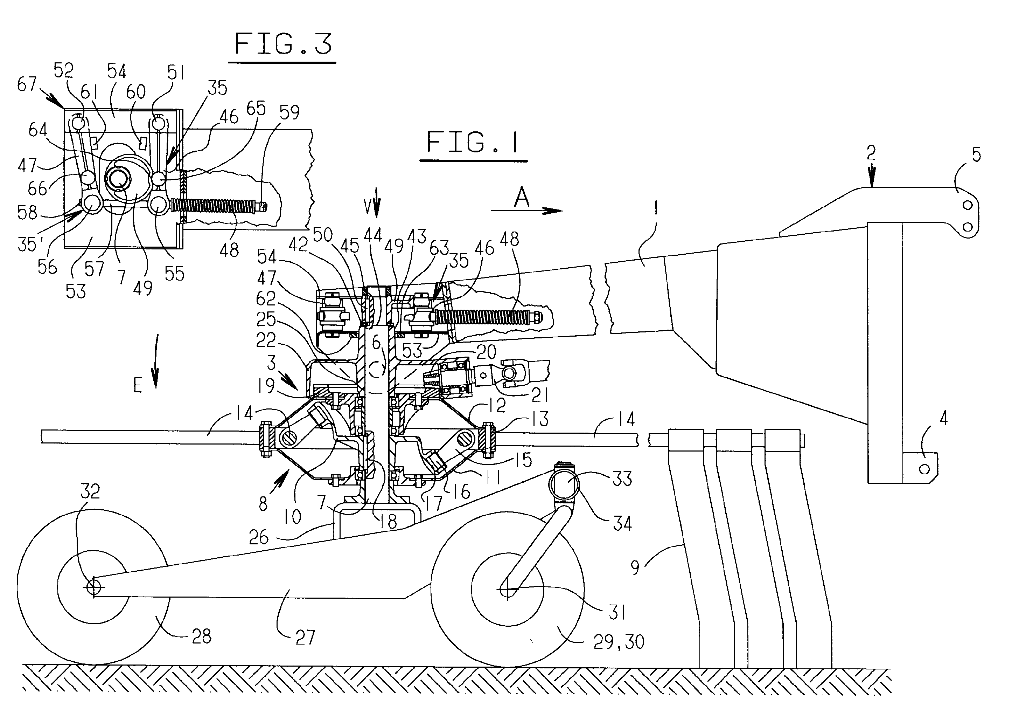

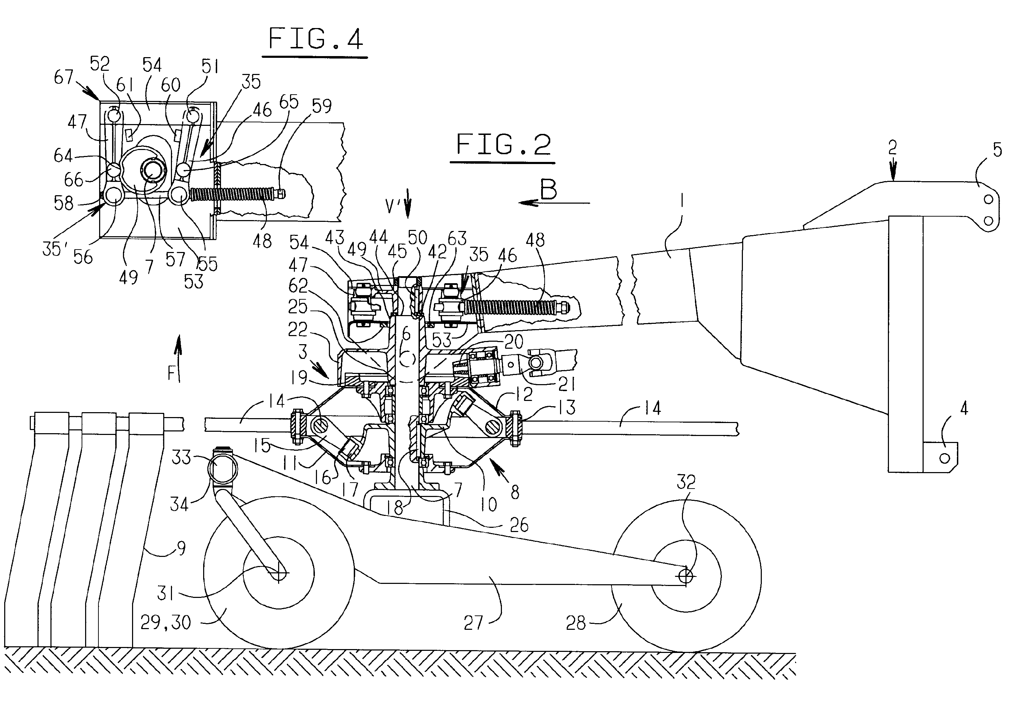

La machine représentée sur les Figures 1 et 2 peut être transposée dans deux positions différentes afin de pouvoir travailler dans la direction (A) (Figure 1) et dans la direction opposée (B) (Figure 2). Pour passer de la direction de travail (A) dans la direction (B) ou inversement, la came de commande (10) doit être tournée de 180° afin que la zone sur laquelle les outils (9) ramassent les produits au sol se situe constamment sur la partie la plus en avant du rotor (3). Dans l'exemple des Figures 1 et 2, cette rotation est obtenue automatiquement. A cet effet, l'axe support (7) forme avec la came de commande (10) et les roulettes (28, 29, 30) un ensemble pouvant tourner de 360° par rapport aux autres pièces du rotor (3) autour de l'axe géométrique longitudinal dudit axe support (7). Ledit axe (7) traverse le couvercle (22) avec un léger jeu radial. Il est bloqué axialement dans le rotor (3) au moyen d'une rondelle (42) qui bute contre un bossage (43) du couvercle (22). La rondelle (42) est elle même bloquée au moyen d'un épaulement (44) prévu sur l'axe (7) et d'un écrou de serrage (45) vissé sur l'extrémité supérieure dudit axe. L'épaulement (44) se situe néanmoins légèrement au-dessus du bossage (43) de manière à éviter une immobilisation en rotation de l'axe (7) lors du serrage de l'écrou (45).

La machine selon les Figures 1 et 2 comporte deux moyens d'actionnement (35 et 35') à actions opposées, agissant l'un ou l'autre sur le rotor (3) en fonction du sens d'avancement (A ou B) de la machine. Dans ce cas, l'axe d'articulation (6) du rotor (3) sur le bâti (1) se situe au moins à proximité de l'axe support (7), les axes géométriques de ces axes (6 et 7) pouvant même se croiser. Les moyens d'actionnement (35 et 35') se situent de part et d'autre dudit axe support (7), au-dessus de l'axe d'articulation (6) du rotor (3) sur le bâti (1). Ils agissent par pression sur la partie dudit axe support (7) qui se situe au-dessus de l'axe d'articulation (6). Les moyens d'actionnement (35 et 35') sont constitués par deux leviers (46 et 47) situés de part et d'autre de l'axe support (7), d'un ressort (48) poussant lesdits leviers vers l'axe support (7) et d'un excentrique (49). Celui-ci est situé sur l'axe support (7) entre les deux leviers (46 et 47). Il est immobilisé en rotation sur ledit axe au moyen d'une clavette (50). Il est en sus situé entre la rondelle (42) et l'écrou (45) précités qui assurent son blocage dans le sens longitudinal sur ledit axe support (7). Cet excentrique fait ainsi partie de l'ensemble qui est constitué par l'axe support (7), la came de commande (10) et les roulettes (28 à 30) et qui peut tourner de 360° par rapport aux autres pièces du rotor(3).

Comme cela ressort notamment des Figures 3 et 4 chaque levier (46 et 47) est articulé au moyen d'une de ses extrémités sur un axe sensiblement vertical (51, 52). Ces deux axes (51, 52) sont fixés sur une plaque (53) et une lame (54) solidaires du bâti (1). Chaque levier (46, 47) comporte à son autre extrémité, située au-delà de l'axe support (7), un pivot (55, 56). Ces deux pivots (55 et 56) sont traversés par une tringle (57). Cette tringle (57) est bloquée par rapport au levier (47) au moyen d'une tête (58), passe librement à travers le pivot (55) du second levier (46) et s'étend au-delà de ce dernier, sur une longueur sensiblement égale à la distance entre les deux leviers (46 et 47). La partie qui s'étend ainsi au-delà du second levier (46) est entourée par le ressort de pression (48). Celui-ci est comprimé entre ledit levier (46) et une butée (59) constituée par une embase et un écrou vissé sur l'extrémité de la tringle (57). Ce ressort (48) pousse ainsi les deux leviers (46 et 47) en direction de l'excentrique (49). La plaque (53) comporte en sus deux butées (60 et 61) pour limiter le pivotement des leviers (46 et 47) autour de leurs axes d'articulation (51 et 52) sous l'effet de la poussée du ressort (48).

L'excentrique (49) est positionné sur l'axe support (7) de telle sorte qu'il soit dirigé vers l'avant, vu dans la direction d'avancement (A ou B) de la machine. On constate sur les Figures 1 et 2 que cet excentrique (49) se situe, par rapport à l'axe support (7), sur le côté opposé à celui sur lequel se trouve la roulette directrice (28). Cette dernière assure le positionnement de l'excentrique (49) en même temps que celui de la came de commande (10). Les dimensions de l'excentrique (49) sont telles qu'en position de travail il dépasse vers l'avant (vu dans le sens d'avancement A ou B) la butée (60 ou 61) du levier (46 ou 47). Ainsi, lorsque la machine est dans la position pour être déplacée dans la direction (A) le levier (46) exerce une pression sur l'excentrique (49), alors que le levier (47) est arrêté par la butée (61).

Inversement, lorsque la machine est dans la position pour être déplacée dans la direction (B), c'est le levier (47) qui exerce une pression sur l'excentrique (49). Le levier (46) est alors arrêté par sa butée (60). La plaque (53) du bâti (1) comporte de part et d'autre de l'axe support (7) des arrêts (62 et 63) pour limiter les pivotements du rotor (3) autour de son axe d'articulation (6).

L'excentrique (49) présente en sus dans sa partie la plus en avant par rapport au sens d'avancement (A ou B) de la machine, une encoche (64). Chaque levier (46, 47) comporte dans sa partie qui est en contact avec ledit excentrique une saillie (65, 66) ayant des dimensions telles qu'elle peut se loger en partie dans l'encoche (64) précitée. Ces saillies (65, 66) peuvent avantageusement être constituées par des galets montés libres en rotation sur les leviers (46, 47).

L'ensemble des moyens d'actionnement (35 et 35') sont logés au-dessus du rotor (3) dans un compartiment (67) du bâti (1). Ils sont ainsi protègés par les parois dudit compartiment.

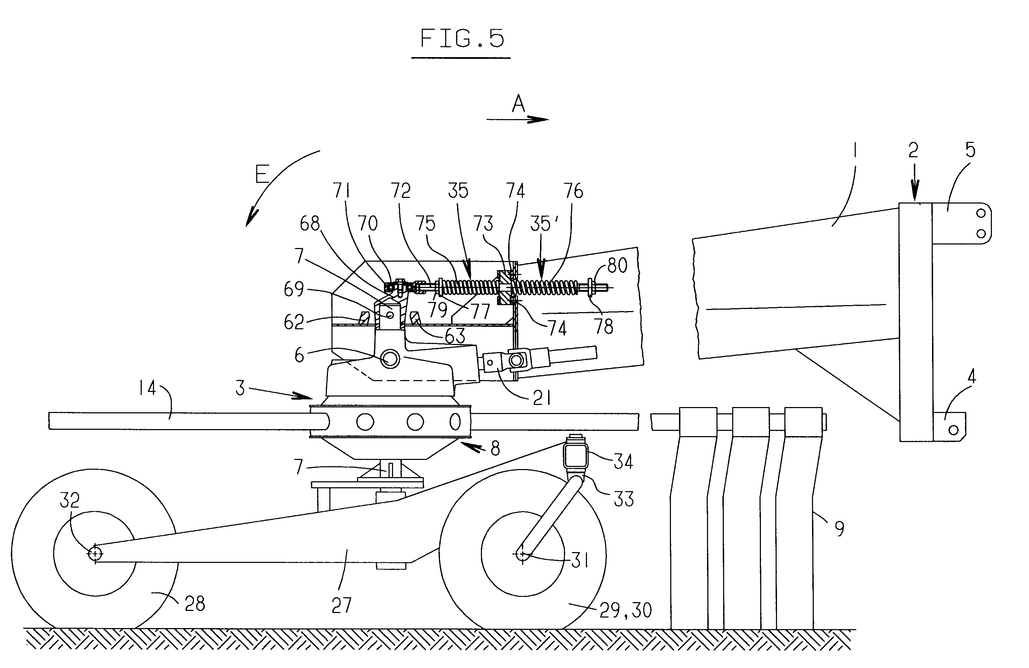

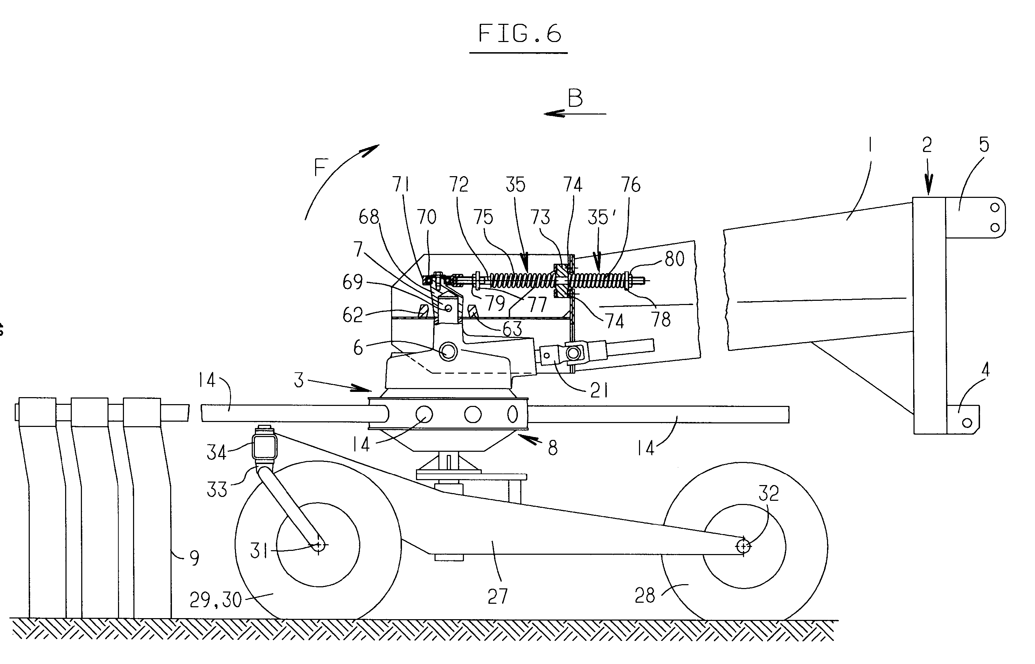

Les figures 5 et 6 représentent une machine avec les mêmes caractéristiques que celle représentée sur les figures 1 et 2, mais avec des moyens d'actionnement (35 et 35') agencés différemment. Pour cette raison, seuls lesdits moyens seront décrits en détail ci-après. Un excentrique (68) est monté sur l'axe support (7) à l'aide d'une goupille (69). Cet excentrique (68) est engagé dans un roulement à billes (70) qui est logé dans une bague (71) qui est elle même solidaire d'une tringle (72). Celle-ci s'étend dans le bâti (1) en direction du dispositif d'accouplement (2). Elle traverse un pivot (73) qui est logé dans deux paliers (74) solidaires du bâti (1). Ce pivot peut tourner autour de son axe géométrique longitudinal. La tringle (73) passe en sus à travers deux ressorts de pression (75 et 76). Le premier ressort (75) se situe d'un côté du pivot (73) tandis que le second ressort (76) se situe de l'autre côté dudit pivot. La tringle (72) comporte également deux rondelles (77 et 78) et deux écrous (79 et 80) constituant des butées règlables pour les ressorts (75 et 76).

Dans la position représenté sur la figure 5 l'excentrique (68) se situe plus près du dispositif d'accouplement (2) que l'axe support (7) du rotor (3). La tringle (72) est alors poussée vers ledit dispositif d'accouplement et le ressort (75) est comprimé entre la rondelle (77) et le pivot (73). Le second ressort (76) est détendu.

Lorsque la machine est dans la position pour être déplacée dans la direction B, telle que représentée sur la figure 6, l'excentrique (68) est plus éloigné du dispositif d'accouplement (2) que l'axe support (7). Durant son déplacement il a entrainé la tringle (72). Ainsi, dans cette position le premier ressort (75) est détendu et le second ressort (76) est comprimé entre le pivot (73) d'une part et la rondelle (78) et l'écrou (80) d'autre part.

Durant le travail le rotor (3) des différents exemples de réalisation décrits ci-dessus est entraîné en rotation autour de son axe support (7). Cet entraînement est assuré par le pignon (20) qui est lui-même entraîné à partir de l'arbre de prise de force du tracteur qui sert à déplacer la machine dans la direction (A ou B). Durant cette rotation, la came (10) commande les bras porte-outils (14) par l'intermédiaire de leurs leviers (15) et leurs galets (16) qui se déplacent dans cette came (10). Cette commande est telle que dans la partie avant de leur trajectoire, les outils (9) sont sensiblement verticaux et ramassent les produits tels que du fourrage, qui se trouvent sur le sol. Ensuite, sur la partie latérale de leur trajectoire, les outils (9) se lèvent et déposent les produits ramassés sous la forme d'un andain. Enfin, sur la partie arrière de leur trajectoire, lesdits outils reviennent progressivement dans la position pour ramasser.

La machine selon les Figures 1 et 2 peut être déplacée dans la direction (A) et dans la direction (B). Au travail elle peut être utilisée aussi bien à l'arrière qu'à l'avant d'un tracteur si celui-ci est équipé d'un dispositif d'attelage frontal. Lorsque la machine est déplacée dans la direction (A) (voir Figures 1 et 3), le levier (46) exerce une pression sur l'axe support (7) par l'intermédiaire de l'excentrique (49). Cette pression a tendance à faire pivoter le rotor (3) autour de son axe d'articulation (6) dans le sens de la flèche (E). Dans ce cas, il s'opère un report partiel de charge des roulettes avant (29, 30) sur la roulette arrière (28). Lesdites roulettes avant suivent alors plus facilement les dénivellations du sol et peuvent aisément franchir les éventuels obstacles. En sus, grâce au fait que la roulette arrière (28) est appliquée au sol sa position est plus stable. Ceci lui permet de mieux assurer sa fonction d'orientation de la came de commande (10) des bras porte-outils (14).

Par ailleurs, dès que la machine est déplacée dans la direction (B) (Figures 2 et 4) la roulette (28) se replace automatiquement derrière l'axe support (7). Durant son positionnement elle fait tourner ledit axe support autour de son axe géométrique longitudinal d'environ 180°. Avec ce dernier tournent également les deux roulettes (29 et 30), la came de commande (10) et l'excentrique (49). Ce dernier se dégage ainsi du levier (46) et entre en contact avec le levier (47). Celui-ci exerce alors une pression sur l'axe support (7) à travers l'excentrique (49), laquelle pression tend à faire pivoter tout le rotor (3) autour de l'axe d'articulation (6) dans le sens de la flèche (F). De ce fait, on obtient à nouveau un report partiel de charge des roulettes avant (29, 30) sur la roulette arrière (28) afin que lesdites roulettes avant puissent mieux s'adapter au sol et que la roulette arrière (28) soit stabilisée.

Dans chacune des deux positions décrites ci-dessus, la saillie (65 ou 66) du levier (46 ou 47) qui est poussé sur l'excentrique (49) se situe dans l'encoche (64) de ce dernier. Cette saillie (65 ou 66) contribue à maintenir l'ensemble qui est constitué par l'excentrique (49), l'axe support (7), la came de commande (10) et les roulettes (28 à 30) dans leur position notamment lorsque la roulette arrière (28) n'est plus en contact avec le sol et ne peut donc plus assurer elle-même le positionnement dudit ensemble. Cela se produit par exemple lorsque la machine est soulevée pour faire demi-tour en bout de terrain. Grâce à cette caractéristique, la came de commande (10) et l'excentrique ne sont pas déplacés par la simple pression des galets (16) des bras porte-outils (14) sur ladite came et sont donc en mesure d'assumer leur rôle dès que la machine est reposée sur le sol.

D'autre part, lorsque la machine est complètement dégagée du sol, le rotor (3) est poussé contre l'arrêt (62 ou 63) qui est prévu sur le bâti (1). Le rotor (3) est ainsi immobilisé dans cette position.

La machine selon les figures 5 et 6 peut également être déplacée dans la direction (A) et dans la direction (B). Lorsqu'elle est déplacée dans la direction (A) (figure 5) la tringle (72) exerce une pression sur l'excentrique (68) et l'axe support (7) sous l'effet de la poussée du ressort (75). Cette pression a tendance à faire pivoter le rotor (3) autour de l'axe d'articulation (6) dans le sens de la flèche (E). Il s'opère ainsi un report partiel de charge des roulettes avant (29, 30) sur la roulette arrière (28) ce qui permet auxdites roulettes avant de mieux suivre les dénivellations du sol. En sus, la roulette arrière (28) est appliquée au sol.

Lorsque la machine est déplacée dans la direction (B) (figure 6) la roulette (28) se place à nouveau derrière l'axe support (7). Ce faisant, elle fait tourner de 180° les deux autres roulettes (29 et 30), l'axe (7), la came de commande (10) et l'excentrique (68). Ce dernier déplace alors la tringle (72) de sorte que le ressort (76) soit comprimé. De ce fait le ressort (76) exerce une pression sur la tringle (72) afin qu'elle tire sur l'axe (7). Cette traction à tendance à faire pivoter le rotor (3) autour de l'axe d'articulation (6) dans le sens de la flèche (F). On obtient ainsi de nouveau un report partiel de charge des roulettes avant (29, 30) sur la roulette arrière (28).

Dans ce mode de réalisation le bâti (1) comporte également deux butées (62 et 63) qui limitent les pivotements du rotor (3) autour de l'axe d'articulation (6).

Il est bien évident que l'invention n'est pas limitée aux modes de réalisation tels que décrits ci-dessus et représentés sur les dessins annexés. Des modifications restent possibles, notamment du point de vue de la constitution des divers éléments ou par substitutions d'équivalents techniques sans pour autant sortir du domaine de protection, tel que défini dans les revendications.

## Revendications

1. Machine agricole comportant un bâti (1) pouvant être accroché à un tracteur d'entraînement et portant au moins un rotor (3) muni d'outils de travail (9) commandés par une came centrale (10), en vue de déplacer des produits se trouvant sur le sol, ledit rotor (3) étant articulé sur le bâti (1) au moyen d'un axe (6) sensiblement perpendiculaire à la direction d'avancement (A ou B) de la machine et comportant un axe support central (7) auquel sont reliées des roulettes porteuses (28, 29, 30) qui se déplacent sur le sol durant le travail et qui sont disposées sur au moins deux lignes (31, 32) décalées l'une par rapport à l'autre dans la direction d'avancement (A ou B) de la machine, laquelle came centrale (10) peut être tournée d'au moins 180° pour travailler dans des directions d'avancement opposées (A ou B), caractérisée par le fait qu'elle comporte au moins deux moyens d'actionnement (35 et 35') à actions opposées disposés entre le bâti (1) et le rotor (3), et qui font pivoter l'un ou l'autre, en fonction de la position de la came (10), le rotor (3) autour de son axe d'articulation (6) sur le bâti en direction (flèche E ou F) de la ou des roulette(s) (28) située(s) sur la ligne (32) la plus en arrière par rapport au sens d'avancement (A ou B), de telle sorte que cette ou ces roulette(s) (28) soit(ent) poussée(s) vers le sol et que la charge supportée par les roulettes (29, 30) situées sur la ligne (31) la plus en avant soit diminuée.

2. Machine selon la revendication 1, caractérisée par le fait que l'axe d'articulation (6) du rotor (3) se situe au moins à proximité de l'axe support (7) dudit rotor et que les deux moyens d'actionnement (35 et 35') agissent sur cet axe support (7).

3. Machine selon la revendication 1 ou 2, caractérisée par le fait que les moyens d'actionnement (35 et 35') se situent au-dessus de l'axe d'articulation (6) du rotor (3) sur le bâti (1).

4. Machine selon au moins une des revendications précédentes, caractérisée par le fait que les moyens d'actionnement (35 et 35') sont constitués par deux leviers (46 et 47) situés de part et d'autre de l'axe support (7) du rotor (3), d'un ressort (48) poussant lesdits leviers vers ledit axe support et d'un excentrique (49) situé sur l'axe support (7) entre les deux leviers (46 et 47).

5. Machine selon la revendication 4, caractérisée par le fait que l'axe support (7) du rotor (3) est guidé en rotation dans ledit rotor et peut tourner autour de son axe longitudinal ensemble avec les roulettes (28 à 30), la came de commande (10) et l'excentrique (49).

6. Machine selon la revendication 4, caractérisée par le fait que les deux leviers (46 et 47) sont articulés sur des axes sensiblement verticaux (51, 52) solidaires du bâti (1).

7. Machine selon la revendication 4 ou 6, caractérisée par le fait qu'une tringle (57) est bloquée par rapport au levier (47) et passe par l'autre levier (46), laquelle tringle comporte sur sa partie située au-delà de cet autre levier (46) un ressort de pression (48) comprimé entre ce levier (46) et une butée (59).

8. Machine selon la revendication 7, caractérisée par le fait que les leviers (46 et 47) comportent des pivots (55 et 56) pour le passage de la tringle (57).

9. Machine selon l'une au moins des revendications 4 à 8, caractérisée par le fait que la bâti (1) comporte des butées (60 et 61) pour limiter le pivotement de chaque levier (46 et 47) autour de son axe d'articulation (51 et 52).

10. Machine selon la revendication 4 ou 5, caractérisée par le fait que l'excentrique (49) se situe sur le côté avant de l'axe support (7), vu par rapport au sens d'avancement (A ou B) de la machine.

11. Machine selon au moins une des revendications précédentes, caractérisée par le fait qu'elle comporte des moyens d'immobilisation (64, 65, 66) de l'axe support (7).

12. Machine selon la revendication 11 et l'une au moins des revendications 4 à 10, caractérisée par le fait que l'excentrique (49) comporte dans sa partie située la plus en avant par rapport au sens d'avancement (A ou B) de la machine, une encoche (64).

13. Machine selon la revendication 12, caractérisée par le fait que chaque levier (46 et 47) comporte une saillie (65 et 66) pouvant se loger au moins partiellement dans l'encoche (64) de l'excentrique (49).

14. Machine selon la revendication 13, caractérisée par le fait que les saillies (65 et 66) sont constituées par des galets.

15. Machine selon au moins une des revendications 1 à 3, caractérisée par le fait que les moyens d'actionnement (35 et 35') comprennent un excentrique (68) qui est monté sur l'axe support (7), une tringle (72) qui est reliée audit excentrique et deux ressorts (75 et 76) à actions opposées, qui agissent sur ladite tringle (72).

16. Machine selon la revendication 15, caractérisée par le fait que l'axe support (7) du rotor (3) est guidé en rotation dans ledit rotor et peut tourner autour de son axe longitudinal ensemble avec les roulettes (28 à 30), la came de commande (10) et l'excentrique (68).

17. Machine selon la revendication 15 ou 16, caractérisée par le fait que la tringle (72) traverse un pivot (73) qui est relié au bâti (1) et que les ressorts (75 et 76) sont disposés sur la tringle (72), le premier (75) d'un côté dudit pivot (73) et le second de l'autre côté.

18. Machine selon au moins une des revendications 15 à 17, caractérisée par le fait que la tringle (72) est reliée à l'excentrique (68) au moyen d'une bague (71).

19. Machine selon au moins une quelconque des revendications 15 à 18, caractérisée par le fait que la tringle (72) comporte des butées (77 à 80) pour les ressorts (75 et 76).

20. Machine selon au moins une des revendications précédentes, caractérisée par le fait que les moyens d'actionnement (35 et 35') se situent dans un compartiment (67) du bâti (1).

21. Machine selon au moins une des revendications précédentes, caractérisée par le fait que le bâti (1) comporte des arrêts (62 et 63) pour limiter les pivotements du rotor (3).

## Patentansprüche

1. Landmaschine mit einem Rahmen (1), der an einen Antriebsschlepper angehängt werden kann und zumindest einen Rotor (3) trägt, der mit von einer zentralen Steuerkurve (10) gesteuerten Arbeitswerkzeugen (9) versehen ist, um auf dem Boden befindliche Produkte zu versetzen, welcher Rotor (3) an dem Rahmen (1) mittels einer zur Vorschubrichtung (A oder B) der Maschine im wesentlichen rechtwinkelig verlaufenden Achse (6) angelenkt ist und eine zentrale Tragachse (7) aufweist, mit welcher Tragräder (28, 29, 30) verbunden sind, die während der Arbeit auf dem Boden laufen und die auf zumindest zwei Linien (31, 32) angeordnet sind, die relativ zueinander in Vorschubrichtung (A oder B) der Maschine versetzt sind, welche zentrale Steuerkurve (10) für das Arbeiten in entgegengesetzten Vorschubrichtungen (A oder B) um zumindest 180° gedreht werden kann, dadurch gekennzeichnet, daß sie zumindest zwei zwischen dem Rahmen (1) und dem Rotor (3) angeordnete entgegengesetzt wirkende Betätigungsmittel (35 und 35') aufweist, die den Rotor (3) abwechselnd in Abhängigkeit von der Stellung der Steuerkurve (10) um die Gelenkachse (6) auf dem Rahmen in Richtung (Pfeil E oder F) des Rades oder der Räder (28), das (die) sich auf der in Vorschubrichtung (A oder B) hintersten Linie (32) befindet (befinden), schwenken lassen, sodaß dieses Rad oder diese Räder (28) gegen den Boden gedrückt wird (werden) und die von den auf der vordersten Linie (31) befindlichen Rädern (29, 30) getragene Last vermindert wird.

2. Maschine nach Anspruch 1, dadurch gekennzeichnet, daß sich die Gelenkachse (6) des Rotors (3) zumindest in der Nähe der Tragachse (7) des Rotors befindet, und daß diese beiden Betätigungsmittel (35 und 35') auf diese Tragachse (7) wirken.

3. Maschine nach Anspruch 1 oder 2, dadurch gekennzeichnet, daß sich die Betätigungsmittel (35 und 35') oberhalb der Achse (6) der Gelenkverbindung des Rotors (3) mit dem Rahmen (1) befinden.

4. Maschine nach zumindest einem der vorhergehenden Ansprüche, dadurch gekennzeichnet, daß die Betätigungsmittel (35 und 35') aus zwei Hebeln (46 und 47), die sich zu beiden Seiten der Tragachse (7) des Rotors (3) befinden, aus einer Feder (48), die die Hebel gegen die Tragachse drückt, und einem Exzenter (49) bestehen, der sich auf der Tragachse (7) zwischen den beiden Hebeln (46 und 47) befindet.

5. Maschine nach Anspruch 4, dadurch gekennzeichnet, daß die Tragachse (7) des Rotors (3) drehbar in dem Rotor geführt ist und zusammen mit den Rädern (28 bis 30), der Steuerkurve (10) und dem Exzenter (49) um ihre Längsachse rotieren kann.

6. Maschine nach Anspruch 4, dadurch gekennzeichnet, daß die beiden Hebel (46 und 47) an zwei am Rahmen (1) befestigten, im wesentlichen vertikalen Achsen (51, 52) angelenkt sind.

7. Maschine nach Anspruch 4 oder 6, dadurch gekennzeichnet, daß eine Stange (57) in bezug auf den Hebel (47) fixiert ist und den anderen Hebel (46) durchsetzt, welche Stange auf ihrem jenseits dieses anderen Hebels (46) befindlichen Teil eine zwischen diesem Hebel (46) und einem Anschlag (59) zusammengedrückte Druckfeder (48) trägt.

8. Maschine nach Anspruch 7, dadurch gekennzeichnet, daß die Hebel (46 und 47) Gelenkzapfen (55 und 56) für den Durchtritt der Stange (57) aufweisen.

9. Maschine nach zumindest einem der Ansprüche 4 bis 8, dadurch gekennzeichnet, daß der Rahmen (1) Anschläge (60 und 61) zur Begrenzung der Schwenkbewegung jedes Hebels (46 und 47) um seine Gelenkachse (51 und 52) aufweist.

10. Maschine nach Anspruch 4 oder 5, dadurch gekennzeichnet, daß sich der Exzenter (49) auf der vorderen Seite der Tragachse (7), in bezug auf die Vorschubrichtung (A oder B) der Maschine betrachtet, befindet.

11. Maschine nach zumindest einem der vorhergehenden Ansprüche, dadurch gekennzeichnet, daß sie Mittel (64, 65, 66) zum Immobilisieren der Tragachse (7) aufweist.

12. Maschine nach Anspruch 11 und zumindest einem der Ansprüche 4 bis 10, dadurch gekennzeichnet, daß der Exzenter (49) in seinem in bezug auf die Vorschubrichtung (A oder B) der Maschine vordersten Teil eine Rast (64) umfaßt.

13. Maschine nach Anspruch 12, dadurch gekennzeichnet, daß jeder Hebel (46 und 47) einen Ansatz (65 und 66) aufweist, der sich zumindest teilweise in der Rast (64) des Exzenters (49) anlegen kann.

14. Maschine nach Anspruch 13, dadurch gekennzeichnet, daß die Ansätze (65 und 66) aus Rollen bestehen.

15. Maschine nach zumindest einem der Ansprüche 1 bis 3, dadurch gekennzeichnet, daß die Betätigungsmittel (35 und 35') einen Exzenter (68), der auf der Tragachse (7) montiert ist, eine Stange (72), die mit dem Exzenter verbunden ist, und zwei entgegengesetzt wirkende Federn (75 und 76), die auf die Stange (72) wirken, umfassen.

16. Maschine nach Anspruch 15, dadurch gekennzeichnet, daß die Tragachse (7) des Rotors (3) drehbar im Rotor geführt ist und zusammen mit den Rädern (28 bis 30), der Steuerkurve (10) und dem Exzenter (68) um ihre Längsachse rotieren kann.

17. Maschine nach Anspruch 15 oder 16, dadurch gekennzeichnet, daß die Stange (72) einen Gelenkzapfen (73) durchsetzt, der mit dem Rahmen (1) verbunden ist und daß die Federn (75 und 76) auf der Stange (72) angeordnet sind, die erste (75) auf einer Seite des Drehzapfens (73) und die zweite auf der anderen Seite.

18. Maschine nach zumindest einem der Ansprüche 15 bis 17, dadurch gekennzeichnet, daß die Stange mit dem Exzenter (68) mittels eines Rings (71) verbunden ist.

19. Maschine nach zumindest einem der Ansprüche 15 bis 18, dadurch gekennzeichnet, daß die Stange (72) Anschläge (77 bis 80) für die Federn (75 und 76) aufweist.

20. Maschine nach zumindest einem der vorhergehenden Ansprüche, dadurch gekennzeichnet, daß sich die Betätigungsmittel (35 und 35') in einer Kammer (67) des Rahmens (1) befinden.

21. Maschine nach zumindest einem der vorhergehenden Ansprüche, dadurch gekennzeichnet, daß der Rahmen (1) Anschläge (62 und 63) zur Begrenzung der Schwenkbewegungen des Rotors (3) aufweist.

## Claims

1. An agricultural machine comprising a structure (1) which can be hitched up to a drive tractor and which has at least one rotor (3) equipped with working tools (9) driven by a central cam (10), with a view to moving products located on the ground, the said rotor being articulated on the structure (1) by means of an axis (6) substantially perpendicular to the direction of advance (A or B) of the machine and comprising a central support shaft (7) to which are connected supporting wheels (28, 29, 30) which move over the ground during work and which are arranged on at least two lines (31, 32) offset in relation to each other in the direction of advance (A or B) of the machine, which central cam (10) can be turned through at least 180° in order to work in opposing directions of advance (A or B), characterised in that it has at least two means of control (35 and 35') with opposite actions arranged between the structure (1) and the rotor (3), and one or other of which, according to the position of the drive cam (10), makes the rotor (3) pivot around the axis of articulation (6) on the structure, in the direction (arrow E or F) of the wheel(s) (28) situated on the hindmost line (32) in relation to the direction of advance (A or B), in such a way that this or these wheel(s) (28) is/are pushed towards the ground and that the load supported by the wheels (29, 30) situated on the foremost line (31) is reduced.

2. A machine in accordance with claim 1 characterised in that the axis of articulation (6) of the rotor (3) is situated at least in the vicinity of the support shaft (7) of the said rotor and in that the two control means (35 and 35') act on this support shaft (7).

3. A machine in accordance with claim 1 or 2, characterised in that the control means (35 and 35') are situated above the axis of articulation (6) of the rotor (3) on the structure (1).

4. A machine in accordance with at least one of the preceding claims, characterised in that the control means (35 and 35') are made up of two levers (46 and 47) situated on either side of the support shaft (7) of the rotor (3), a spring (48) pushing the said levers towards the said support shaft and an eccentric (49) situated on the support shaft (7) between the two levers (46 and 47).

5. A machine in accordance with claim 4, characterised in that the support shaft (7) of the rotor (3) is guided in rotation in the said rotor and can turn around its longitudinal axis together with the wheels (28 to 30), the control cam (10) and the eccentric (49).

6. A machine in accordance with claim 4, characterised in that the two levers (46 and 47) are articulated on substantially vertical axes (51, 52) which are solidly fixed to the structure (1).

7. A machine in accordance with claim 4 or 6, characterised in that a rod (57) is blocked in relation to the lever (47) and goes through the other lever (46), the rod comprising on the part of it situated beyond this other lever (46) a compression spring (48) compressed between this lever (46) and a stop (59).

8. A machine in accordance with claim 7, characterised in that the levers (46 and 47) have pivots (55 and 56) for the passage of the rod (57).

9. A machine in accordance with at least one of claims 4 to 8, characterised in that the structure (1) comprises abutments (60 and 61) to limit the pivoting of each lever (46 and 47) around its axis of articulation (51 and 52).

10. A machine in accordance with claim 4 or 5, characterised in that the eccentric (49) is situated on the front side of the support shaft (7), seen in relation to the direction of advance (A or B) of the machine.

11. A machine in accordance with at least one of the preceding claims, characterised in that it comprises means of immobilising (64, 65, 66) the support shaft (7).

12. A machine in accordance with claim 11 and one at least of claims 4 to 10, characterised in that the eccentric (49) has a notch (64) in its foremost part in relation to the direction of advance (A or B) of the machine.

13. A machine in accordance with claim 12, characterised in that each lever (46 and 47) has a projection (65 and 66) which is able to lodge at least partially in the notch (64) of the eccentric (49).

14. A machine in accordance with claim 13, characterised in that the projections (65 and 66) are made up of rollers.

15. A machine in accordance with at least one of claims 1 to 3, characterised in that the control means (35 and 35') comprise an eccentric (68) which is mounted on the support shaft (7), a rod (72) which is connected to the said eccentric and two springs (75 and 76) with opposing actions, which act on the said rod (72).

16. A machine in accordance with claim 15, characterised in that the support shaft (7) of the rotor (3) is guided in rotation in the said rotor and can turn around its longitudinal axis together with the wheels (28 to 30), the control cam (10) and the cccentric (68).

17. A machine in accordance with claim 15 or 16, characterised in that the rod (72) goes through a pivot (73) which is connected to the structure (1) and in that the springs (75 and 76) are arranged on the rod (72), the first on one side of the said pivot (73) and the second on the other side.

18. A machine in accordance with at least one of claims 15 to 17, characterised in that the rod (72) is connected to the eccentric (68) by means of a ring (71).

19. A machine in accordance with at least any one of the claims 15 to 18, characterised in that the rod (72) has stops (77 to 80) for the springs (75 and 76).

20. A machine in accordance with at least one of the preceding claims, characterised in that the control means (35 and 35') are situated in a compartment (67) of the structure (1).

21. A machine in accordance with at least one of the preceding claims, characterised in that the structure (1) has stops (62 and 63) to limit the pivotings of the rotor (3).
